(19) Europäisches Patentamt
European Patent Office
Office européen des brevets

(11) EP 4 767 833 A1

(12) EUROPEAN PATENT APPLICATION

(43) Date of publication:
**01.07.2026 Bulletin 2026/27**

(21) Application number: **24223814.5**

(22) Date of filing: **31.12.2024**

(51) International Patent Classification (IPC):
***A23L 17/60*** *(2016.01)* ***A23L 27/00*** *(2016.01)*
***A23L 29/00*** *(2016.01)*

(52) Cooperative Patent Classification (CPC):
**A23L 17/60; A23L 27/84; A23L 29/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Unilever IP Holdings B.V.**
**6708 WH Wageningen (NL)**

(72) Inventors:
- **BOUWENS, Elisabeth Maria**
  **6708 WH Wageningen (NL)**
- **VAN DEN BROM, Coenraad R.**
  **6708 WH Wageningen (NL)**
- **DENEKAMP, Ilse Maria**
  **6708 WH Wageningen (NL)**
- **DRAAISMA, René Bernardus**
  **6708 WH Wageningen (NL)**
- **DRAIJER, Richard**
  **6708 WH Wageningen (NL)**
- **HOLLEBRANDS, Boudewijn**
  **6708 WH Wageningen (NL)**

(74) Representative: **Unilever Patent Group**
**Bronland 14**
**6708 WH Wageningen (NL)**

# (54) FOOD COMPOSITION

(57) The invention relates to a method of producing a food composition comprising microalgal biomass with reduced off-flavour, said method comprising adding at least 0.001 wt.%, calculated by weight of the food product, of an aldehyde scavenger, said aldehyde scavenger containing at least 5 wt.%, calculated by weight of the aldehyde scavenger of cysteine. The invention also relates to Food composition comprising microalgal biomass material, said material comprising at least 5 wt% of microalgal protein by weight of dry matter of the microalgal biomass, and 2-pentyl-1,3-thiazolidine-4-carboxylic acid and/or salts thereof, and optionally, water. The invention also relates to a food composition comprising microalgal biomass material, comprising at least 5 wt% of microalgal protein by weight of dry matter of the microalgal biomass; hexanal or a source of hexanal; and at least 0.001 wt.%, calculated by weight of the food product, of an aldehyde scavenger, said aldehyde scavenger containing at least 5 wt.%, calculated by weight of the aldehyde scavenger of cysteine.

EP 4 767 833 A1

## Description

### Field of the Invention

The present application relates to a food composition. In particular it relates to a food composition comprising microalgal biomass material. The invention also relates to a process for the preparation of the food composition, and to use of microalgal biomass material in a food composition.

### Background of the Invention

Microalgae have been widely investigated as a potential source of food ingredients or nutrients for human consumption, for instance as a source of protein [Klamczynska, B., and W. D. Mooney. "Heterotrophic microalgae: a scalable and sustainable protein source." Sustainable protein sources. Academic Press, 2017. 327-339]. Moreover, biopolymers extracted from microalgae (typically involving cell disruption) may find application as texturiser, stabiliser or emulsifier [Tom M.M. Bernaerts et al, "The potential of microalgae and their biopolymers as structuring ingredients in food: A review", Biotechnology Advances, 2019, vol. 37(8), 107419, doi.org/10.1016/j.biotechadv.2019.107419].

Thus, many food applications of microalgae have been described in literature, see Abreu, A.P.; Martins, R.; Nunes, J. "Emerging Applications of Chlorella sp. and Spirulina (Arthrospira) sp.", Bioengineering 2023, 10, 955, https://doi.org/10.3390/bioengineering10080955; Kumar, Raman, et al., "Microalgae as a sustainable source of edible proteins and bioactive peptides-Current trends and future prospects", Food Research International 157 (2022), 111338, https://doi.org/10.1016/j.foodres.2022.111338; Torres-Tiji, Yasin, Francis J. Fields, and Stephen P. Mayfield, "Microalgae as a future food source", Biotechnology advances 41 (2020), 107536; Caporgno MP and Mathys A, "Trends in Microalgae Incorporation Into Innovative Food Products With Potential Health Benefits', Front. Nutr. 5:58 (2018), doi: 10.3389/fnut.2018.00058; N Hosseinkhani, JI McCauley, PJ Ralph "Key challenges for the commercial expansion of ingredients from algae into human food products" - Algal Research, (2022), https://www.sciencedirect.com/science/article/pii/S2211926422000674.

WO24105258 discloses the use of microalgae biomass subjected to high pressure homogenisation in the preparation of food products, including for instance vegan dairy alternatives.

A serious drawback of microalgal biomass is its often outspoken sensory profile. This may limit the general applicability of such biomass in food products. In particular, certain elements of this profile are perceived as a sensory defect, off-flavour, or off-taste by many consumers, especially in food products with an otherwise mild or subtle flavour profile. Typical off-flavours that are discerned in microalgal biomass and food products made with them are green, cardboard, earthy, ocean-like, grass, and seaweed off-notes.

Therefore, it is an object of the present invention to improve the applicability of microalgal biomass in food applications. Such food applications typically include drinkable applications, such as beverages as well. It is a further object to mitigate, reduce, or even eliminate at least part of the sensory defects associated with microalgal biomass, in particular their off-flavour and/or off-taste. It is another object of the present invention to make microalgal biomass more palatable, at least when consumed as part of a food product. Likewise, it also is an object of the invention to provide a method or use to mitigate, reduce or even eliminate such sensory defects.

### Summary of the Invention

It has surprisingly been found that one or more of the above objectives can be achieved by the present invention. It was found that sensory defects, in particular part of the off-flavour of microalgal biomass in a food product can be reduced or even removed by combining the biomass with cysteine and allowing the cysteine to react with off-flavour-bringing molecules before consumption of the food product. Therefore, the invention entails contacting microalgal biomass with cysteine in or before addition to a food product. Cysteine may for example be allowed to react well before consumption of the product (for instance in moist or fluid food products), or an appropriate amount of cysteine may be included in dry food products containing microalgal biomass and that are intended for aqueous reconstitution.

According to a first aspect, the invention provides a method of producing a food composition comprising microalgal biomass with reduced off-flavour, said method comprising adding at least 0.001 wt.%, calculated by weight of the food product, of an aldehyde scavenger, said aldehyde scavenger containing at least 5 wt.%, calculated by weight of the aldehyde scavenger of cysteine.

According to a second aspect, the invention provides a food composition obtainable by the method according to the invention.

The inventors have found that that cysteine is capable of reacting with off-flavour-generating aldehydes under the formation of a reaction product that does not adversely affect the flavour of a food composition comprising microalgal biomass material. An important example of such a reaction product is 2-pentyl-1,3-thiazolidine-4-carboxylic acid (PTCA),

which is formed by the reaction between cysteine and hexanal:

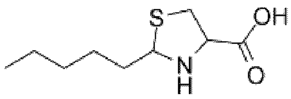

Besides hexanal, also other aldehydes that contribute to the off-flavour of microalgal biomass material (especially 2-methylpropanal, 3-methylbutanal, 2-methylbutanal, furfural and phenylacetaldehyde) can be scavenged by cysteine.

The scavenging reaction between cysteine and aldehydes is believed to be represented by the following reaction scheme:

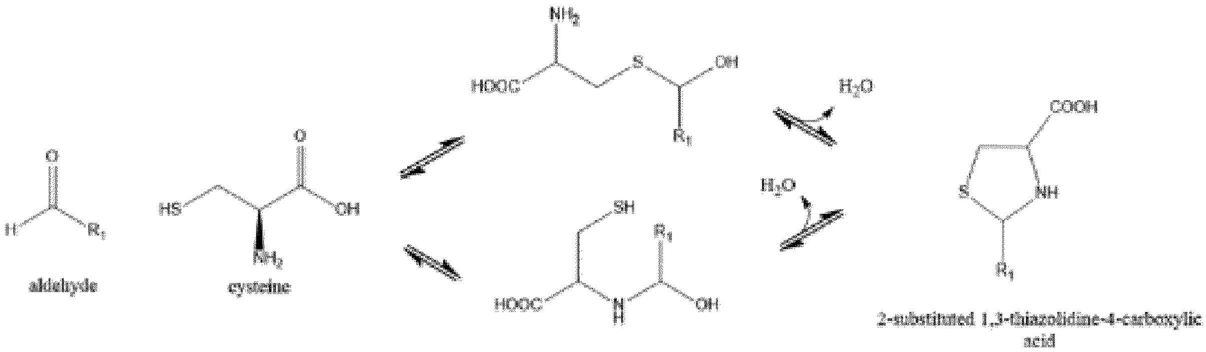

aldehyde
cysteine
2-substituted 1,3-thiazolidine-4-carboxylic acid

Hexanal is an aldehyde that is responsible for a significant part of the off-flavour that is caused by the presence of aldehydes in microalgal biomass material. Indeed, the intensity of the off-flavour is strongly correlated with the hexanal content of a food composition comprising such microalgal biomass material. Addition of cysteine in accordance with the present invention yields a food composition that contains the reaction product of hexanal and cysteine, i.e., 2-pentyl-1,3-thiazolidine-4-carboxylic acid and/or salts thereof.

According to a third aspect, the invention provides a food composition comprising

a. microalgal biomass material, comprising at least 5 wt% of microalgal protein by weight of dry matter of the microalgal biomass, and
b. 2-pentyl-1,3-thiazolidine-4-carboxylic acid and/or salts thereof, and
c. optionally, water.

The reaction of the aldehyde scavenger with aldehydes present in microalgal biomass material is relatively fast. Therefore, in order to reduce the aldehyde content of a food composition before consumption, it is typically already sufficient if the reaction takes place the moment a consumer adds water to a dry food product (comprising the microalgal biomass material) just before consumption.

According to a fourth aspect, the invention therefore provides a food composition comprising

a. microalgal biomass material, comprising

  i at least 5 wt% of microalgal protein by weight of dry matter of the microalgal biomass,
  ii hexanal or a source of hexanal;

b. at least 0.001 wt.%, calculated by weight of the food product, of an aldehyde scavenger, said aldehyde scavenger containing at least 5 wt.%, calculated by weight of the aldehyde scavenger of cysteine.

According to a fifth aspect, the invention provides use of cysteine as an off-flavour suppressor in a food product containing of microalgal biomass material.

## Detailed Description of the Invention

The word 'comprising' as used herein is intended to mean 'including' but not necessarily 'consisting of' or 'composed of'. In other words, the listed steps or options need not be exhaustive.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention, ambient temperature is defined as a temperature of about 20°C. Except in the examples and comparative experiments, or where otherwise explicitly indicated, all numbers are to be understood as modified by the word "about".

Unless indicated otherwise, weight percentages (wt.%) are based on the total weight of the composition.

The terms "a" and "an" and "the" and similar referents as used herein refer to both the singular and the plural, unless otherwise indicated herein or clearly contradicted by context. The term "mouth feel" as used herein refers to the overall appeal of a food product, which stems from the combination of characteristics such as moistness, chewiness, bite force, degradation, and fattiness, creaminess, viscosity, astringency, that together provide a satisfactory sensory experience.

A microalga species is any member from the group of single-celled eukaryotic algae within the phylum *Chlorophyta* (Chlorophytes) capable of photoautotrophic, heterotrophic or mixotrophic growth. *Chlorophyta* and their properties are described for instance in Thoré, Eli SJ, et al. "Microalgae." Current Biology 33.3 (2023): R91-R95.

The term "protein isolate" as used herein refers to material having at least 80 wt% of protein based on dry matter. Examples include soy protein isolate, pea protein isolate, potato protein isolate and *Chlorella* protein isolate. Thus, a protein isolate is a refined form (typically the most highly refined form) of protein product that is separated from other biomass components by physical or chemical means. It typically contains substantially no dietary fibre. The term "protein concentrate" as used herein refers to material having at least 50 wt% protein based on dry matter. A protein concentrate is typically obtained from a natural source (such as for example *Chlorella* biomass or soy meal) by removing at least part of the non-proteinaceous constituents, thereby ending up with a relatively higher protein content. Thus, a protein concentrate is a refined protein product that is less concentrated than protein isolates, as it may contain residual carbohydrate and dietary fibre. Accordingly, protein concentrates typically comprise between 55-70% protein by dry weight.

Food or food ingredients that are "vegan food" or "vegan food ingredients" are not products of animal origin, and they do not contain ingredients that are derived from or made by animals.

Whenever components A and B are said to be present in a weight ratio of x:y, what is meant is that the concentration of component A in wt.% divided by the concentration of component B in wt.% equals x:y.

Concentrations expressed as a percentage by dry weight, as mentioned herein, refer to the amount of dry ingredient present in a composition as a percentage of the total amount of dry matter contained in the same composition. Here dry matter includes all matter that is contained in the composition except for water and components having a lower boiling point than water.

The amount of dry matter in a composition or an ingredient can suitably be determined by weighing such a composition or ingredient before and after water has been removed therefrom in an autoclave.

Ratios mentioned herein are based on weight/weight, unless indicated otherwise. Similarly, all percentages are percentages by weight (w/w) unless otherwise indicated.

When multiple preferred ranges are described in the format "from x to y" for a specific feature, it should be understood that all ranges combining the different endpoints are also contemplated.

If, for a particular component, a range of 0% to y% or less than y% is recited, said ingredient may be absent.

The term "substantially free from" as used herein means that such ingredients are not added as such for a specific functionality but can be present in trace amounts.

The term "free amino acids", as known to the skilled person, refers to amino acids that are not part of peptides or proteins. Likewise, the term "free cysteine" refers to cysteine that is not part of a peptide or protein.

Whenever reference is made herein to "cysteine", unless indicated otherwise, the free amino acid is meant.

The term "2-pentyl-1,3-thiazolidine-4-carboxylic acid" refers to 2-pentyl-1,3-thiazolidine-4-carboxylic acid and/or salts thereof, unless specified otherwise.

The term "fat", as used herein, refers to glycerides selected from triglycerides, diglycerides, monoglycerides, phosphoglycerides and combinations thereof. The term "fat" encompasses fats that are liquid at 20 °C and fats that are solid or semi-solid at 20 °C. The melting point of a fat can be determined according to ISO 6321 (2021).

*Microalgal biomass*

In the context of the present invention (according to all its aspects), "microalgal biomass" refers to the biomass as it is grown upon cultivation or fermentation or other means of growing microalgae, whether in unrefined form or after downstream processing. Thus, the term encompasses both wet and dry biomass, concentrated and purified biomass.

Preferably, the microalgal biomass is in dry form. More preferably, the microalgal biomass material is in powder form. In particular in case the food product is in the form of a reconstitutable product, such a biomass material in powder form is preferred.

The food composition of the invention preferably comprises from 1 to 40 wt-%, more preferably from 2.5 to 30 wt-% and even more preferably from 5 to 15 wt-% of the microalgal biomass by weight of dry matter of the food composition. Likewise, the method of the invention is preferably a method for producing a food composition comprising the microalgal biomass in such amounts.

The microalgal biomass material used in the present invention can be lysed, or be present in the form non-lysed single cells and/or clusters of non-lysed single cells. Lysis of microalgal biomass material is a well-known treatment directed towards disrupting the microalgal cells and liberating their contents and even disentangling its cell wall components. Lysis is typically achieved by subjecting the biomass to relatively high shear, for instance by treatment in a high-pressure homogeniser, or e.g. a Microfluidiser. In some embodiments of the invention, the microalgal biomass material is preferably lysed.

In contrast, in other embodiments, the microalgal biomass material usable in the present invention still contains relatively intact (though possibly dehydrated) cell structures, as reflected by the particle size (D[4,3]) of the single cells and/or clusters of single cells. In that case, the non-lysed single cells and/or clusters of non-lysed single cells preferably have a particle size (D[4,3]) of from 2 μm to 100μm, preferably from 3 μm to 60 μm, more preferably from 4 to 50 μm, and even more preferably from 5 to 45 μm as measured upon redispersion in an aqueous medium at a concentration of 3 wt-% of microalgal biomass material by total weight of the aqueous medium and the microalgal biomass material.

The D[4,3] value is a well-known measure of particle size for a material which features a particle size distribution. The volume moment mean D[4,3] is the mean diameter calculated based on the particles volume (De Brouckere Mean Diameter). This value is relevant for many samples as it reflects the size of particles, which constitute the bulk of the sample volume. It is sensitive to the presence of large particles. The values of d(0.1), d(0.5), and d(0.9) represent the maximum particle size for a given percentage volume of the sample (10%, 50%, and 90%, respectively). For example, the d(0.5) is the maximum particle diameter, where 50% of the particles population (volume based) is below this value, also known as the median particle size by volume. These values can suitably be determined by the method described herein.

The Span of the particle size distribution can be calculated as follows:

$$\text{Span} = (d(0.9) - d(0.1)) / d(0.5)$$

Preferably, the non-lysed single cells and/or clusters of non-lysed single cells have a d(0.1) of between 1.5 μm and 10 μm, more preferably between 2 μm and 9 μm. Preferably, the non-lysed single cells and/or clusters of non-lysed single cells have a d(0.5) of between 5 μm and 60 μm, more preferably between 8 μm and 40 μm. Preferably, the non-lysed single cells and/or clusters of non-lysed single cells have a d(0.9) of less than 150 μm, more preferably of between 50 μm and 150 μm, more preferably between 60 μm and 120 μm. Preferably the non-lysed single cells and/or clusters of non-lysed single cells have a span of between 1 and 20, more preferably between 2 and 10. It is particularly preferred that the non-lysed single cells and/or clusters of non-lysed single cells have a d(0.1) of between 2 μm and 9 μm, and a d(0.9) of between 60 μm and 120 μm.

It is believed that a relatively high protein content in the microalgal biomass material is favourable, both in terms of its rheological and/or sensorial properties and in terms of its nutritional value. Therefore the microalgal biomass material in the food composition of the present invention preferably comprises at least 20 wt%, more preferably at least 30 wt% of microalgal protein by weight of dry matter of the microalgal biomass.

The microalgal biomass material is preferably sourced from microalgae of the subphylum *Chlorophytina,* more preferably from the class *Trebouxiophyceae* or the class *Chlorophyceae,* more preferably from the class *Trebouxiophyceae,* even more preferably from the order of *Chlorellales,* still more preferably from the family of *Chlorellaceae.*

It is especially preferred that the microalgal biomass material is sourced from the family *Chlorellaceae* and even more preferred that it is sourced from the genus *Chlorella.*

*Chlorella* species are well-known and their production (even at industrial scale) is well-described [Jin Liu and Qiang Hu, Handbook of Microalgal Culture: Applied Phycology and Biotechnology, Second Ed.; Eds. Amos Richmond and Qiang Hu, John Wiley & Sons (2013), Chapter 16, Chlorella: Industrial Production of Cell Mass and Chemicals*]*

Thus, the microalgal biomass material is preferably *Chlorellaceae* biomass material, more preferably it is selected from *Chlorella, Auxenochlorella, Parachlorella,* or *Heterochlorella* biomass material or combinations thereof. Even more preferably, the microalgal biomass material is *Chlorella* biomass material.

The microalgal biomass material may also be *Chlorophyceae* biomass material, more preferably *Prototheca* or *Chlamydomonas* material.

Certain species of these genera are particularly suited for use in the present invention. Therefore, the microalgal biomass material is preferably sourced from *Chlorella vulgaris, Chlorella sorokiniana, Auxenochlorella pyrenoidosa, Auxenochlorella protothecoides, Parachlorella kessleri, Heterochlorella luteoviridis, Chlamydomonas reinhardtii* or *Prototheca moriformis* or combinations thereof

Here, it is noted that *Auxenochlorella* protothecoides is also known as *Chlorella protothecoides and Auxenochlorella pyrenoidosa* is also known as *Chlorella pyrenoidosa,* in view of earlier taxonomic conventions.

Even more preferably, the microalgal biomass material is sourced from *Chlorella vulgaris, Chlorella sorokiniana,*

*Auxenochlorella protothecoides,* or combinations thereof.

Thus, the food composition of the present invention preferably comprises from 1 to 40 wt-%, more preferably from 2.5 to 30 wt-% and even more preferably from 5 to 15 wt-% of the *Chlorellaceae* biomass by weight of dry matter of the food composition.

The general production of suitable microalgal biomass is known to the skilled person. It typically involves growing a suitable microalga in a fermenter, followed by downstream processing (DSP).

An example of growing a *Chlorella* species is provided in Doucha, J., Lívanský, K. "Production of high-density Chlorella culture grown in fermenters", J Appl Phycol 24, 35-43 (2012), https://doi.org/10.1007/s10811-010-9643-2.

Downstream processing may involve a suitable combination of harvesting, diafiltration, washing, concentrating, centrifugation, drying, spray-drying. The only requirement is that non-lysed biomass can be obtained from it. See for example Safi, Carl, et al. "Morphology, composition, production, processing and applications of Chlorella vulgaris: A review", Renewable and sustainable energy reviews 35 (2014): 265-278, https://doi.org/10.1016/j.rser.2014.04.007. Thus, obtaining non-lysed biomass is relatively straightforward, see also T.T.M. Bernaerts *et al,* Bernaerts TMM, Gheysen L, Foubert I, Hendrickx ME, Van Loey AM. The potential of microalgae and their biopolymers as structuring ingredients in food: A review. Biotechnol Adv. 2019 Dec;37(8):107419. doi: 10.1016/j.biotechadv.2019.107419. Epub 2019 Jul 21. PMID: 31340183.

In case the microalgal species is a *Chlorellaceae* species, such as *Chlorella vulgaris,* centrifugation is a preferred step in downstream processing, typically followed by spray-drying.

Many wild-type microalgal species are green, due to their chlorophyll content. For some food compositions of the present invention, a green colour would be perceived as undesirable. Therefore, it is preferred that the microalgal biomass is paly green, yellow or white, more preferably white. It is also preferred that the biomass is low in chlorophyll, more preferably substantially free from chlorophyll. Likewise, a neutral taste, flavour and colour make the biomass more generally applicable in food compositions.

All the above preferences expressed with regard to the microalgal biomass material apply equally to all aspects of the invention. For the avoidance of doubt, any preference described with respect to the food composition of the invention also applies with respect to the food composition in the method of the invention for producing a food composition and in use according to the invention involving a food composition.

*Method*

According to the first aspect, the invention provides a method of producing a food composition comprising microalgal biomass with reduced off-flavour, said method comprising adding at least 0.001 wt.%, calculated by weight of the food product, of an aldehyde scavenger, said aldehyde scavenger containing at least 5 wt.%, more preferably at least 25%, even more preferably at least 50 wt% and still more preferably at least 75 wt%, calculated by weight of the aldehyde scavenger of cysteine. It is also preferred that the aldehyde scavenger is cysteine.

The aldehyde scavenger that is employed in the present method preferably contains 5-100 wt.% of cysteine.

In one embodiment of the invention, the aldehyde scavenger employed is highly purified and contains 50-100 wt.% of cysteine. This type of aldehyde scavenger is preferably added in an amount of 0.001-1 wt.%, more preferably 0.01-0.5 wt.% and most preferably 0.05-0.2 wt.%, calculated by weight of the food composition.

In another embodiment, the aldehyde scavenger contains less than 50 wt.% or even less than 30 wt.% of cysteine. Protein hydrolysate is an example of such an aldehyde scavenger. In the present method, this type of aldehyde scavenger is preferably added in an amount of at least 0.01 wt.%, more preferably in an amount of 0.05-5 wt.%, most preferably 0.1-0.5 wt.%, calculated by weight of the food composition.

According to a particularly preferred embodiment, the aldehyde scavenger is added in an amount providing 0.001-0.6 wt.% of cysteine, calculated by weight of the food composition. More preferably, the aldehyde scavenger is added in an amount providing 0.005-0.4 wt.%, most preferably 0.01-0.2 wt.% of cysteine, calculated by weight of the food composition.

In a preferred embodiment, the aldehyde scavenger is added to provide added cysteine in a stochiometric (molar) ratio of cysteine to aldehydes between 1:2 and 100:1, said aldehydes preferably being selected from n-hexanal, 2-methylpropanal, 3-methylbutanal, 2-methylbutanal, furfural and phenylacetaldehyde. More preferably, said stochiometric ratio is between 1:1 and 80:1, even more preferably between 2:1 and 60:1, most preferably between 3:1 and 30:1.

According to a particularly preferred embodiment of the present method, no reducing sugar is added or reducing sugar is added in an amount that does not exceed 30% by weight of cysteine. If reducing sugar is added in the present method, the added amount preferably does not exceed 10% by weight of cysteine, more preferably it does not exceed 5% by weight of cysteine. Most preferably no reducing sugar is added in the present method.

In the present method, addition of the aldehyde scavenger preferably reduces n-hexanal concentration in the meat analogue by at least 50%, more preferably by at least 60% and most preferably by at least 70%.

According to a particularly preferred embodiment, the addition of the aldehyde scavenger preferably leads to the

formation of 2-pentyl-1,3-thiazolidine-4-carboxylic acid and/or salts thereof. More preferably, addition of the aldehyde scavenger increases the concentration of 2-pentyl-1,3-thiazolidine-4-carboxylic acid and/or salts thereof by at least 0.4 mg/kg, more preferably by 1-40 mg/kg and most preferably by 2-32 mg/kg.

The addition of the aldehyde scavenger preferably increases the weight ratio of 2-pentyl-1,3-thiazolidine-4-carboxylic acid and/or salts thereof to n-hexanal by at least a factor 3, more preferably at least a factor 5, even more preferably at least a factor 15 and most preferably by at least a factor 50.

At room temperature, addition of the aldehyde scavenger in accordance with the present invention achieves a very rapid reduction of the hexanal content. Preferably, a 50% reduction of the hexanal content of the food composition is observed within 3 hours, more preferably within 2 hours, even more preferably within 1 hour after addition of the aldehyde scavenger.

The method of the invention preferably comprises the step of combining at least part of the microalgal biomass with the aldehyde scavenger. This step may be performed before or after the microalgal biomass is combined with any other ingredient of the food composition.

In order to expedite the reaction of the aldehyde scavenger with the aldehydes, the step of combining the microalgal biomass with the aldehyde scavenger preferably takes place in the presence of moisture. More preferably, a sufficient amount of water is present during the combination step. Here, a sufficient amount is an amount which enables the reaction to take place. This can suitably be monitored by sensory testing or by analytical methods.

In some embodiments, it is preferred that the food composition is sold in dry format. For example, if the method is for producing a water-reconstitutable food composition. In that case, there is no need for the aldehyde scavenger to react immediately upon combination with the microalgal biomass material. In that case, the step of adding moisture or water to the composition does not have to take place during production, because the reaction of the aldehyde scavenger can take place as soon as the end user reconstitutes the food composition.

The method preferably is a method for producing a food composition according to one or more aspects of the invention.

*Food compositions*

According to the second aspect, the invention also provides a food composition obtainable by the method according to the invention.

According to the third aspect, the invention also provides a food composition comprising

a. microalgal biomass material, comprising at least 5 wt% of microalgal protein by weight of dry matter of the microalgal biomass, and
b. 2-pentyl-1,3-thiazolidine-4-carboxylic acid and/or salts thereof, and
c. optionally, water.

The 2-pentyl-1,3-thiazolidine-4-carboxylic acid and/or salts thereof are typically formed upon reaction of cysteine with hexanal, in order to reduce or remove off-flavour associated with the (untreated) microalgal biomass material. That reaction is expedited by the presence of moisture. Therefore, the food composition preferably comprises water. The food product does not need to be liquid, in order to contain a sufficient moisture level. A certain amount of water may even have been removed from the product after the aldehyde level had been sufficiently reduced.

On the other hand, this food composition preferably is in fluid form, for instance in the form of a ready-to-drink beverage, malt-based beverage, milked tea, soup, sauce, dressing, mayonnaise, etc.

Non-fluid food products can for instance be in the form of a gel, or otherwise comprise a matrix in which moisture is absorbed.

The food composition preferably contains at least 0.4 mg/kg, more preferably at least 1 mg/kg, even more preferably at least 2 mg/kg and most preferably at least 3 mg/kg of 2-pentyl-1,3-thiazolidine-4-carboxylic acid and/or salts thereof, by total weight of the food composition.

The food composition preferably contains not more than 500 mg/kg, more preferably not more than 400 mg/kg, and even more preferably not more than 300 mg/kg and most preferably not more than 200 mg/kg of 2-pentyl-1,3-thiazolidine-4-carboxylic acid and/or salts thereof, by total weight of the food composition.

The food composition according to the invention preferably contains at least 0.4 mg/kg of 2-pentyl-1,3-thiazolidine-4-carboxylic acid and/or salts thereof and preferably not more than 500 mg/kg of 2-pentyl-1,3-thiazolidine-4-carboxylic acid and/or salts thereof.

The total level of microalgal biomass material in the composition may be varied over wide concentration ranges as indicated above. Therefore, the food composition preferably contains at least 0.4 mg/kg, more preferably at least 1 mg/kg, even more preferably at least 2 mg/kg and most preferably at least 3 mg/kg of 2-pentyl-1,3-thiazolidine-4-carboxylic acid and/or salts thereof, by weight of dry matter of the microalgal biomass material. Likewise, the food

composition preferably comprises not more than 1 g/kg, more preferably not more than 500 mg/kg, more preferably not more than 400 mg/kg, and even more preferably not more than 300 mg/kg and most preferably not more than 200 mg/kg of 2-pentyl-1,3-thiazolidine-4-carboxylic acid and/or salts thereof, by dry weight of the microalgal biomass material.

The level of an aldehyde is preferably reduced to below the sensory detection threshold of the average consumer. Therefore, in the food composition, n-hexanal is preferably present in a concentration of not more than 40 mg/kg, more preferably not more than 20 mg/kg and even more preferably not more than 10 mg/kg.

According to a fourth aspect, the invention also provides a food composition comprising

a. microalgal biomass material, comprising

i at least 5 wt.% of microalgal protein by weight of dry matter of the microalgal biomass,
ii hexanal or a source of hexanal;

b. at least 0.001 wt.%, calculated by weight of the food product, of an aldehyde scavenger, said aldehyde scavenger containing at least 5 wt.%, calculated by weight of the aldehyde scavenger of cysteine.

The reaction of the aldehyde scavenger with aldehydes present in microalgal biomass material is relatively fast. Therefore, in order to reduce the aldehyde content of a food composition before consumption, it is typically already sufficient if the reaction takes place the moment a consumer adds water to a dry food product (comprising the microalgal biomass material) just before consumption. Therefore, the food composition is preferably capable of forming 2-pentyl-1,3-thiazolidine-4-carboxylic acid (and/or salts thereof) upon contacting with water.

In order for a food product to have an acceptable taste to many consumers, an aldehyde (especially the n-hexanal) does not have to be entirely removed from the food composition. It generally suffices if the level of an aldehyde is reduced to below the sensory detection threshold of the average consumer.

The food composition preferably is in the form of a dry water-reconstitutable food composition, and capable of yielding upon reconstitution a liquid food composition in which n-hexanal is present in a concentration of not more than 40 mg/kg, more preferably not more than 20 mg/kg.

All preferences with regard to the aldehyde scavenger expressed herein in relation to the method of the invention also apply to the aldehyde scavenger in the food composition.

In particular, in the food composition of the fourth aspect of the invention, the aldehyde scavenger is preferably present in an amount providing 0.001-0.6 wt.% of cysteine, calculated by weight of the food composition. More preferably, the aldehyde scavenger is added in an amount providing 0.005-0.4 wt.%, most preferably 0.01-0.2 wt.% of cysteine, calculated by weight of the food composition.

The aldehyde scavenger is preferably present in an amount providing cysteine in a stochiometric (molar) ratio of cysteine to aldehydes between 1:2 and 100:1, said aldehydes preferably being selected from n-hexanal, 2-methylpropanal, 3-methylbutanal, 2-methylbutanal, furfural and phenylacetaldehyde. More preferably, said stochiometric ratio is between 1:1 and 80:1, even more preferably between 2:1 and 60:1, most preferably between 3:1 and 30:1

The present invention is applicable in a wide variety of food product formats. The food composition of the invention is preferably in the form of an instant, cook-up, or ready-to-heat savoury product, a savoury concentrate, a savoury sauce or soup, a condiment, a ketchup, a mayonnaise, a cooking cream base, a multi-purpose cream, a malt-based drink, a milked tea drink, an ice cream or a milk shake.

A much preferred type of food composition is a dry, reconstitutable concentrate. In particular savoury concentrates and beverage concentrates are product formats in which the present invention can suitably be applied. Therefore, the composition of the invention preferably is a savoury concentrate or a beverage concentrate. Such concentrates typically serve to prepare ready-to-eat compositions or ready-to-drink beverages. Thus, savoury concentrates include for instance dry soups, dry sauces, seasonings, bouillon powders, and meal-makers. Alternatively, the savoury concentrate may be used as a seasoning mix, for instance one that is used in a product that also includes a carbohydrate component.

The savoury concentrate, in addition to the components required according to the invention, preferably comprises

a) 3 to 85 wt-% of inorganic salt;
b) 0.5 to 60 wt-% of fat;
c) optional further components;

wherein the wt-% is by weight of dry matter of the total composition.

More preferably, the savoury concentrate, in addition to the components required according to the invention, comprises

a) 3 to 85 wt-% of inorganic salt;
b) 0.5 to 60 wt-% of fat;
c) 0 to 50 wt-% of savoury taste-giving ingredients selected from glutamate, 5'-ribonucleotides, sucrose, glucose, fructose, lactic acid, citric acid and combinations thereof;
d) 0 to 25 wt-% of starch component selected from native starch, pregelatinised starch, maltodextrin, modified starch and combinations thereof;
e) 0 to 45 wt-% of vegetable matter other than (c), selected from vegetables, herbs, spices and combinations thereof;
f) 0 to 10 wt-% of water;

wherein the wt-% is by weight of dry matter of the total composition.

Here, the components a) to e) together preferably constitute at least 55 wt.% of the savoury concentrate and the microalgal biomass and components a) to f) together preferably constitute at least 75 wt.% of the savoury concentrate.

The dry concentrate, in particular the savoury concentrate or malt-based drink concentrate, can come in several forms or shapes: typical forms are free-flowing powders, granulates, shaped concentrates and pastes.

*Savoury concentrate in particulate or powder form*

The composition of the invention preferably is a dry concentrate in powder form, comprising, in addition to the components required according to the invention:

a) 3 to 85 wt-% of inorganic salt;
b) 0 to 2 wt-%, more preferably 1 to 1.5 wt-% of of edible oil;
c) optional further components;

wherein the wt-% is by weight of dry matter of the total composition.

More preferred oils to be additionally present in this product format are soybean oil, sunflower oil, rapeseed oil, corn oil (maize oil), olive oil, linseed oil, palm olein and fractions and combinations thereof, and even more preferably oils are sunflower oil, rapeseed oil, olive oil and linseed oil.

Alternatively, the food composition can be in the form of particulate savoury composition comprising, in addition to the components required according to the invention:

a) 1-80 wt.%, by weight of the composition, of an edible salt selected from sodium chloride, potassium chloride and combinations thereof;
b) 1-30 wt.%, by weight of the composition, of savoury taste giving ingredients selected from glutamate, 5'-ribonucleotides, sucrose, glucose, fructose, lactic acid, citric acid and combinations thereof;
c) up to 10 wt.%, by weight of the composition, of water;

wherein the sum of a) and b) is at least 20 wt.%, of the total weight of the composition.

This type of formulation is especially preferred if the composition serves as a seasoning composition.

*Granulated savoury concentrate*

In one preferred embodiment, the savoury concentrate is a granulate having a mass weighted average diameter in the range of 0.1-5 mm, said granulate comprising the following components, in addition to the components required according to the invention:

a) 1-85 wt%, more preferably 35-85 wt.%, preferably 40-75 wt.% of inorganic salt;
b) 3-20 wt.%, preferably 4-15 wt.% fat;
d) 2-20 wt.%, preferably 5-15 wt.% of the savoury taste-giving ingredients;

wherein the wt-% is by weight of dry matter of the total composition.

The granulate preferably has a mass weighted average diameter in the range of 0.2-2 mm, most preferably in the range of 0.25-1.5 mm.

*Shaped savoury concentrate*

A savoury concentrate may suitably be shaped. For example, a composition comprising mainly powderous ingredients can be shaped into a desirable shape by known means, including for instance mould-casting, sintering, freeze-drying, etc.

In accordance with another preferred embodiment of the invention, the savoury concentrate is a shaped article having a weight of 2-50 g, said shaped article comprising the following components, in addition to the components required according to the invention:

a) 35-70 wt.%, preferably 40-60 wt.% of the inorganic salt;
b) 5-30 wt.%, preferably 15-25 wt.% of the fat, said fat having a solid fat content at 20°C ($N_{20}$) of at least 5%;
c) 0-20 wt.%, preferably 2-18 wt.% of the savoury taste-giving ingredients;

wherein the wt-% is by weight of dry matter of the total composition.

The shaped article preferably has a weight in the range of 2.5-30 g, more preferably in the range of 3.0-28 g and most preferably of 3.2-24 g. The shaped concentrate article can suitably be provided in different forms.

*Savoury concentrate in paste form*

In yet another embodiment the savoury concentrate is in the form of a paste. Such a paste preferably comprises, in addition to the components required according to the invention:

a) 3 to 30 wt-% by dry weight of the total composition of the inorganic salt;
b) at least 30 wt-% by dry weight of the total composition of an oil phase comprising liquid oil in an amount of at least 30 wt-% by weight of the oil phase;
c) 1 to 50 wt-% by dry weight of the total composition of the savoury taste giving ingredients.

The term 'oil phase' as used herein refers to a distinct lipid phase within the savoury concentrate that contains oil and optionally other lipids. Non-lipid components that are dispersed in the oil phase are not part of the oil phase. The concentration of liquid oil in the oil phase of a savoury concentrate equals 100% - $N_{20}$. Thus, a savoury concentrate containing 48 wt.% oil phase having a $N_{20}$ of 5 wt.%, has a liquid oil content of 0.48 x 95 = 45.6 wt.%. Preferably, the oil phase contains at least 50 wt.% of vegetable oil, more preferably at least 70 wt.% and even more preferably the oil phase contains at least 90 wt.% of vegetable oil.

*Preferred components of the savoury concentrate*

The savoury concentrate preferably comprises inorganic salt. The inorganic salt is added to provide a salty taste. The salt preferably comprises NaCl, KCl and mixtures thereof. The high level of inorganic salt is predominantly present to provide the desired salty taste impact after dissolution in a relatively high volume. Preferably, the amount of inorganic salt in the food concentrate is at least 3 wt%, more preferably at least 5 wt%, even more preferably at least 8 wt%, still more preferably at least 10 wt%, yet more preferably at least 15 wt%, and even still more preferably at least 20 wt% by dry weight of the composition. Preferably, the amount of inorganic salt is at most 70 wt%, more preferably at most 60 wt%, even more preferably at most 50 wt%, and still more preferably at most 40 wt%, by dry weight of the composition. Preferably, the amount of NaCl in the savoury concentrate is at least 3 wt%, more preferably at least 5 wt%, even more preferably at least 10 wt%, still more preferably at least 15 wt% and preferably at most 60 wt%, more preferably at most 55 wt%, and still more preferably at most 50 wt%, by dry weight of the total composition.

In addition to the preferences expressed above, for the fat contained in the food composition, the fat contained in the savoury concentrate preferably has a $N_{20}$ of 0-60%, more preferably of 0-40%, even more preferably of 0-30% and still more preferably 0-5%.

The savoury concentrate is for example for preparing a bouillon, a soup, a sauce, a gravy or a seasoned dish. To contribute to the savoury taste, the savoury concentrate may further comprise savoury taste-giving ingredients selected from the group consisting of glutamate, 5'-ribonucleotides, sucrose, glucose, fructose, lactic acid, citric acid and mixtures thereof. The term savoury taste-giving ingredients used in the plural may refer to a single compound or a mixture of more than one taste-giving compounds. The amount of savoury taste-giving ingredients present in the savoury concentrate is preferably an effective amount to obtain the desired level in the ready-to-eat product that is prepared from the concentrate. The effective amount depends on the desired dilution rate and amount in the ready-to-eat product. The savoury taste-giving ingredient in the concentrate is preferably present in an amount of at most 40 wt%, more preferably of at most 30 wt%, more preferably in an amount of at most 25 wt%, most preferably in an amount of at most 15 wt%, and preferably at least 0.1 wt%, more preferably at least 0.5 wt%, more preferably at least 1 wt%, more preferably at least 5 wt%, based on the dry weight of the total savoury concentrate. It is understood that any savoury taste-giving compound can be added as such or as part of more complex food ingredients like yeast extract; hydrolyzed proteins of vegetables-, soy-, fish-, or meat-origin, malt extract, beef flavourings, onion flavouring, liquid or dissolvable extracts or concentrates selected from the

group consisting of meat, fish, crustaceans, herbs, fruit, vegetable and mixtures thereof.

The savoury concentrate preferably contains a starch component selected from native starch, pregelatinised starch, maltodextrin, modified starch and combinations thereof. The starch component is preferably present in the savoury concentrate in a concentration of 3-20 wt.%, more preferably of 4-18 wt.% and most preferably of 5-15 wt.%. The starch component is preferably selected from native starch, maltodextrin, pregelatinised starch and combinations thereof. Even more preferably, the starch is selected from native starch, pregelatinised starch and combinations thereof. Most preferably, the starch component is native starch. The starch component typically has a mass weighted mean diameter in the range of 5-200 μm, more preferably of 10-100 μm, most preferably of 12-60 μm.

The savoury concentrate preferably comprises vegetable matter. This vegetable matter is preferably applied in the form of leaves, slices, florets, dices or other pieces. Thus, the savoury concentrate preferably comprises 0 to 30 wt.%, more preferably 0 to 20 wt-% and even more preferably 1 to 10 wt% by dry weight of the total composition of such vegetable matter (other than the specified plant powders) selected from vegetables, herbs, spices and combinations thereof. Examples of sources of vegetable matter include parsley, dill, basil, chives, sage, rosemary, thyme, oregano, leek, onion, mushrooms, broccoli, cauliflower, tomato, courgette, asparagus, bell pepper, egg plant, cucumber, carrot and coconut flesh.

According to another preferred embodiment, the savoury concentrate contains 0-10 wt.%, more preferably 0.5-8 wt.% and most preferably 1-5 wt.% of gelatine component, said gelatine component being selected from gelatine, hydrolysed gelatine and combinations thereof.

The savoury concentrate typically contains less than 9 wt.% water. More preferably, the concentrate contains 1-8 wt.% water. Most preferably, the concentrate contains 2-7 wt.% water. The water content in the food concentrate can be measured by any standard method including drying the food concentrate and comparing the weight before and after drying.

The food concentrate according to the invention preferably has a water activity of less than 0.65, more preferably less than 0.5, even more preferably less than 0.4, more preferably less than 0.3 and preferably more than 0.15.

The savoury concentrate of the present invention preferably is a packaged savoury concentrate. The portion of the concentrate as packaged preferably has a weight (excluding packaging) of 1 g to 1 kg, preferably 2-250 g, more preferably 5-50 g. The packaging can be e.g. a container, a pouch or a wrapper.

*Instant meal snack*

A very convenient product format for a dry savoury snack is an instant meal snack. Typically, at least one of the components of the instant meal snack is reconstitutable with liquid, especially with hot water. Typically such products include a carbohydrate base, a dry seasoning or sauce mix, and in some cases a dressing for flavour additions. The carbohydrates can be pre-cooked (e.g., by steaming, frying, pre-gelling) for quick re-hydration, and could be, for example: pasta (fusilli, vermicelli, penne formats), noodles (fried noodles, air-dried rice noodles), rice (long, medium, short grains), or wheat (semolina, barley). Other suitable carbohydrate bases are legumes, including for instance lentils, especially legumes that have been pre-treated to make them instant-reconstitutable.

The instant meal suitably also comprises dry seasoning components. These can be mixed in with the carbohydrate base, or be available separately, in the sense that they have to be added or dosed into the carbohydrate base (e.g. after rehydration) by the consumer. Common seasoning mixes could include one or more of on top of flavour components (flavours, herbs, spices, salt), taste enhancer, fat, garnish and thickeners, dry vegetables, dairy, vegetable extracts, tomato powder. Specific seasoning mixes can aim toward a bouillon type of seasoning or specific types of sauces (e.g., bolognese, carbonara, Alfredo, creamy chicken mushroom), where different ingredients are brought together, including dehydrated/powder tomato, dried dairy components (e.g., whey, cream, butter, cheese powder), meat (e.g., freeze dried bacon, ham, chicken), binders (e.g., rice/wheat flour, corn starch), dehydrated vegetables (e.g., broccoli, mushrooms, carrots, chives, parsley). Dressing could include, for example, flavoured oil and soy sauce.

The seasoning may suitably comprise the microalgal biomass material and the alginate. Thus, the seasoning is preferably in the form of a savoury concentrate as described hereinbefore, and even more preferably a savoury concentrate in powder or granulate form.

The instant meal-type snack is suitably packed in a sachet, a container or similar type of packaging. A preferred type of packaging is a cup (esp. a "snack cup"). Typically such cups are designed such that - after removal of the lid - the contents (including at least the carbohydrate base) can easily be reconstituted by pouring in liquid (esp. hot water).

Thus, according to one aspect, the invention relates to a container, preferably in the form of a sachet or a snack cup, more preferably a snack cup, wherein the container comprises a food product in the form of a reconstitutable dry savoury snack, said food product comprising, in addition to the components required according to the invention:

a) at least 45 wt% of a carbohydrate base component by weight of the dry product

b) at least 1 wt%, more preferably at least 2 wt% and even more preferably at least 5wt% of a dry seasoning

component.

*Beverages*

The food composition of the invention preferably is a beverage composition, in particular a dry water reconstitutable beverage composition. In particular, the present invention is suitable for use in beverages in which a creaminess is expected or appreciated by consumers. Preferably, the beverage composition is a malt-based drink or a milked tea. In case the food composition is a malt-based drink, it preferably comprises wheat malt and/or barley malt.

The food composition of any aspect of the invention is preferably obtainable by the method of the invention.

*Use*

According to the fifth aspect, the invention also relates to use of cysteine as an off-flavour suppressor in a food composition containing microalgal biomass material. It preferably relates to such use in a composition comprising at least 1 wt.% of such microalgal biomass material. All preferences with regard to the cysteine, the food compositions of the invention and the method of the invention apply analogously to the use according to the invention.

The invention will now be exemplified by the following non-limiting examples.

## Examples

**Materials:**

**Table 1**

| Microalgal biomass | Code | Obtained from | Form | % Protein | % Fat | % Carbohydrate | % Fibre |
|---|---|---|---|---|---|---|---|
| White Chlorella | WC01 | Allmicroalgae (Allma) Portugal | Powder | 30 | 8 | 24 | 23 |
| White Chlorella | WC02 | Daesang, South Korea | Powder | 58 | - | - | - |

**Method 1: Structured Team Assessment**

A semi-trained team scored anonymised samples on "total off-flavour". This attribute is described as "The level of taste and/or retronasal perception of aroma associated with plant-based and algae ingredients such as green, cardboard, earthy, ocean-like, grass, fishy, seaweed." Off-flavour was ranked with the scoring system as in Table 2

**Table 2**

| Sensory score | Score description |
|---|---|
| 5 | very high off flavour |
| 4 | high off flavour |
| 3 | off flavour is present but not high |
| 2 | low off flavour |
| 1 | very low off flavour |

**Method 2: The analysis of 2-pentylthiazolidine-4-carboxylic acid (PTCA)**

**a. Sample preparation for PTCA analysis**

The samples/dispersions, made as described in the examples, were stored frozen in alliqots of 20 g per tube at -20 °C. Prior to the PTCA analysis the tubes needed were defrosted and then vigorously shaken by hand and mixed with a vortex mixer for 30 seconds. Subsequently, the sample tubes were immersed in an ultrasonic bath for a total duration of 30 minutes. The solutions were transferred into individual eppendorf tubes and centrifugation was applied of 10 minutes at

13000 xg. The sample solutions were transferred into individual HPLC vials and were used for PTCA analysis by liquid chromatography coupled to high resolution mass spectrometry (LC-MS).

**b. Standard preparation**

A solution of isotopically labelled hexanal D12 (hydrogens were exchanged for deuterium) in ethanol with a concentration of 6676 ppm (MW of hexanal D12 is 112 g/mol, so concentration = 59.6 mM) was prepared.

A solution of 1% L-cysteine was freshly prepared in water (MW of cysteine is 121.16 g/mol, so concentration = 82.5 mM)

An isotopically labelled 2-pentylthiazolidine-4-carboxylic acid standard was prepared by reaction of equimolar amounts of cysteine and hexanal-D12 as follows: 36 µl of cysteine 1% solution was pipetted into a 1.5 ml analytical vial. To this vial 50 µl Hexanal-D12 solution was added and 1000 µl of Millipore-grade water. This resulted into a deuterium labelled 2-pentylthiazolidine(D12)-4-carboxylic acid standard with a concentration of approximately 2.74 mM. (59.6 mM * 50/(50+36+1000)= 2.74 mM)

For quantification of PTCA, reference samples were spiked with the PTCA-D12 standard solution in a 1:9 ratio by pipetting 100 µl of internal standard solution to 900 µl of the sample solution. The response of the internal standard was used to quantify the concentration of PTCA in the sample solutions using the LC-MS method used for quantification.

**c. LC-MS Measurement**

All LC-MS analyses were performed using an UltiMate 3000 RS liquid chromatograph connected to a Q-Exactive Plus Hybrid Quadrupole-Orbitrap mass spectrometer (Thermo Fischer Scientific, Waltham MA, USA). A BEH C18 column (2.1 mm x 100 mm, 1.7 µm; Waters, Etten-Leur, The Netherlands) with associated VanGuard pre-column was used for the separations. The analytes were eluted at a flow rate of 0.30 ml/min using a linear gradient of water (solvent A) and acetonitrile (solvent B) both fortified with 0.1% formic acid. The gradient was programmed as followed: 1 min at 0.1% B, in 11.5 min to 40% B, in 2.5 min to 100% B, 2.5 min at 100% B, in 0.1 min back to 0.1% B and finally re-equilibration for 4.4 min at 0.1% B. The total run time was 22 minutes. The column temperature was 40 °C, the temperature of the autosampler was 5 °C, and the injection volume was 2 µL.

The electrospray ion source was operated in alternating positive and negative mode with the following parameters: the capillary temperature was 320 °C, the heater temperature was 350 °C, the sheath gas was set to 50 arbitrary units, the auxiliary gas was set to 13 arbitrary units. The mass spectrometer was operated in full-scan MS mode. The capillary voltage was set to 3.3 kV with a S-lens RF level of 50. Calibration was achieved using Pierce Positive and Negative Ion Calibration Solution (Thermo Fischer). Data acquisition was carried out using Xcalibur 3.1.

Full scan spectra were acquired at a resolution of 35.000 in the *m*/*z* range 100-1500 using a maximum ion injection time of 100 ms.

For identification the instrument was operated in data dependent MS2 mode. From the top 10 most abundant ions ddMS2 scans were acquired at a resolution of 17.500 with an isolation window of 2 *m*/*z* whilst having the dynamic exclusion list set to 10 seconds. The maximum injection time was set to 50 ms and a normalized stepped collision energy was applied of 15, 30 and 60 arbitrary units.

**Method 3: Hexanal analysis**

Equipment used: Gas chromatograph (GC), suitable for capillary columns provided with a split/splitless (SSL) Column injector, Capillary column (Varian (Agilent) VF-5ms, Autosampler with agitator suitable for headspace injections (*Agilent 7890B, provided with Agilent* GC *Sampler 80 autosampler).* Mass spectrometer (MS), suitable for detecting volatiles at low concentrations, EI detector mode; the Column is connected to the MS via a transfer line *(Markes BenchTOF).*

Sample preparation: The samples/dispersions, made as described in the examples, were stored in aliquots of 20 g per tube and frozen at -20 °C. Prior to the hexanal analysis the tubes were defrosted and then vigorously shaken by hand and mixed with a vortex mixer for 30 seconds. Procedure used: 1.0 +/- 0.05 g sample is weighed and placed on the bottom of a Head space (HS) vial. The vial is closed with a magnetic cap with hole and septum. The vial with sample is conditioned in the agitator of the autosampler for 30 min at 40°C. During this sample pretreatment an equilibrium is reached between the sample and the headspace containing the volatiles. After this conditioning, an amount of the headspace of the sample is injected in the GC on an analytical capillary GC column. For the detection a mass spectrometer in full scan mode is used. The (semi-)quantification is based on the created calibration line of known quantities of hexanal. The data acquisition and processing system used were TOF-DS software in combination with Chromeleon software. The appropriate processing method automatically integrates the hexanal peak (or other volatile of interest) using the integrated area of ion 56 for the (semi-)quantification of hexanal. The processing method includes an ion ratio check for hexanal to confirm the

identification of hexanal.

For accurate analysis, the level of volatiles in the sample needs to be between the lowest and highest level of the hexanal calibration line, and samples need to be diluted appropriately, if needed. Levels of Hexanal for the calibration line are between 0.5 PPM and 27.7 PPM.

**Method 4: GC-Headspace analysis of a series of volatiles.**

Sample preparation: The samples/dispersions, made as described in the examples, were stored in aliquots of 20 g per tube frozen at -20 °C. Prior to the GC-headspace analysis the tubes needed were defrosted and then vigorously shaken by hand and mixed with a vortex mixer for 30 seconds.

Method

Technique Description: SPME-Arrow ISQ GCMS

- Volatile compounds are collected via sorptive extraction using Solid Phase Micro-Extraction with an Arrow type of fiber.
- Compound separation of the volatiles by Gas Chromatography.
- Mass Spectrometric Detection using an ISQ (Thermo Scientific).

Analytical parameters, see Table 3.

Method Description:

1 gram per aqueous algae sample (4g/40g) was weighed into a 20 ml Amber Headspace vial. Aqueous Algae samples are heated to 50 degrees Celcius for 5 minutes. Volatiles are collected via sorptive extraction on a PDMS (PolydimethylSiloxane) Arrow type of fiber for 30 minutes at 50 degrees Celcius.

The PDMS-Arrow fiber (20mm x 250μm) with extracted volatiles is desorbed in the GC injector at a temperature of 250 degrees Celcius for 1 minute in splitless mode. For Refocussing of the volatiles, a Cold-Trap (GL Sciences) is used, set at minus 150 degrees Celcius for a duration of 90 seconds after starting sample introduction into the GC injector. The Cold-Trap is heated to 240 degrees Celcius at 60 degrees per second.

Compounds released by the Cold-Trap are separated on a Rtx-624 type of GC column (Restek #10968) at an oven temperature which starts at 35 degrees Celcius, where it is maintained for 5 minutes.

After 5 minutes the oven temperature is increased with 10 degrees per minute to 240 °C, where it is kept for 4.5 minutes. Detection and identification of the compounds was performed using an ISQ MS instrument (Thermo Scientific).

Masses ranging from 33-250 Dalton are collected at a ratio of 4 scans per second. Identification of compounds is performed using the NIST (National Institute of Standards and Technology) Mass Spectral library version 2.2.

For Automated data processing, in one-to-one comparisons GCAnalyzer (MsMetrix BV) is applied.

**Table 3:** Analytical parameters of SPME-Arrow ISQ GCMS method.

| | |
|---|---|
| Autosampler | TriPlus RSH SMART |
| Sampler Mode | SPME-Arrow |
| Fiber Type | PDMS; OD = 1.5 mm Phase Length 20 mm, Phase Thickness = 250 μm |
| SPME Type | 36SA25P1-SM |
| *Sample Tray Type* | R60/20-CVM at 5°C |
| CryoFocus Settings (Coldtrap) | -150°C (90 sec) - 60°C/sec - 240°C / Runtime = 6 min. |
| GC Conditions | Thermo Scientific Trace 1300 Gas Chromatograph |
| Carrier gas | helium, 1.5 ml/min constant flow / Pinit = 86.98 kPa |
| Column | Rtx-624 (Restek #10968) 30 m x 0.25 mm, df=1.4 μm |
| GC oven temperature | 35°C (5 min) - 10°C/min - 240°C (4.5 min) / Runtime = 30 min. |
| Detector | Thermo Scientific ISQ |
| Detector Setting | EI (70 eV) |
| Transfer line temperature (°C) | 240°C |

(continued)

| | |
|---|---|
| Source temperature (°C) | 275°C |
| Mass range | m/z 33-250 |
| Dwell or Scan Times (sec) | 0,25 |
| Solvent Delay (min) | 1,60 |

**Example1: Cysteine-reduced off-flavour of microalgae**

Powder mixes were made by combining microalgae powders WC01 and WC02 (as described above) with maltodextrin with and without L-cysteine hydrochloride monohydrate. To the powder-mixes as given in Table 4 below, between 93-96 ml just boiled water was added to have 100 g dispersions which were mixed manually using a spoon till no lumps were visible. After 5 min the samples were tasted against their reference and scored by a panel on total off flavour (Method 1).

**Table 4:** Powder mix formulations.

| **Sample:** | **1.A*** | **1.1** | **1.B*** | **1.2** |
|---|---|---|---|---|
| **Ingredients:** | (g) | (g) | (g) | (g) |
| WC 01 | 1 | 1 | | |
| WC 02 | 0 | 0 | 4 | 4 |
| L-cysteine hydrochloride monohydrate | 0 | 0.02 | 0 | 0.02 |
| Maltodextrin DE16-20 (CornTapioca Rice) | 3 | 3 | 3 | 3 |
| * = Reference sample | | | | |

**Table 5:** Average off-flavour scores and the calculated score in off-flavour reduction: Panellists N=4

| **Sample:** | **1.A** | **1.1** | **1.B** | **1.2** |
|---|---|---|---|---|
| **Attribute:** | | | | |
| Total off-flavour | 3.8 | 2.1 | 3.5 | 2.5 |
| Total off-flavour reduction(1) | 1.7 | | 1.0 | |
| (1) Total off-flavour reduction = (score[Reference] - score[Example]) | | | | |

As shown in Table 5, total off-flavour was reduced when cysteine was added to the dry powder mixes and then tasted as dispersion in water. Example samples 1.1 and 1.2 were described as less cardboard, less earthy, more natural, compared to the references 1.A and 1.B, respectively.

**Example 2:**

Microalgae powder WC02 was combined with L-cysteine hydrochloride monohydrate as in Table 6. A reference without cysteine was also prepared. To the powder-mixes, tap water was added till 100 g samples were obtained in amounts as given in Table 6 and the dispersions were mixed manually using a spoon till no lumps were visible, the samples were incubated for 3hr at 4°C before they were tasted and scored as described in Method 1 and the hexanal and PTCA contents of the samples were determined as described in Methods 2 and 3.

**Table 6:** Powder mix formulations.

| **Sample:** | **2.A*** | **2.1** |
|---|---|---|
| **Ingredients:** | 9 | 9 |
| WC 02 | 4 | 4 |

(continued)

| Sample: | 2.A* | 2.1 |
|---|---|---|
| Ingredients: | 9 | 9 |
| L-cysteine hydrochloride monohydrate | 0 | 0.025 |
| * = comparative sample | | |

**Table 7:** Data on hexanal, PTCA and total off-flavour scores:

| Sample: | 2.A | 2.1 |
|---|---|---|
| **Analysis** | | |
| Total Off-flavour score | 2.5 | 1.5 |
| Hexanal conc. in headspace (ppm) | 9 | 1 |
| PTCA (ppm) | 1 | 7 |

The data in Table 7 show that for WC02 the total off flavour reduction by cysteine was very clearly tasted by the panel and a reduction in total off-flavour from 2.5 to 1.5 score was demonstrated. The hexanal headspace contents decreased in the samples from 9 ppm to 1 ppm and the PTCA was produced at higher concentrations than without the addition of cysteine.

**Example 3**

To powder-mixes prepared as given in Table 6 of Example 2, tap water was added till 40 g samples were obtained, yielding comparative sample 3.A and sample 3.1, respectively. Each sample was mixed well and incubated for 1 hour at 4 °C and then frozen prior to GC headspace analysis using Method 4. The analysis of a series of volatiles (Table 8) showed that the headspace concentrations of 13 aldehydes were reduced significantly in example 3.1 compared to 3.A.

In this Example, no calibration was performed to convert the headspace levels of the analytes to the corresponding equilibrium concentrations in the liquid samples. Therefore, the headspace reduction factors are not necessarily identical to the reduction factors in the liquid samples, but they clearly show the effect of cysteine on a great number of aldehydes typically associated with off-flavour.

**Table 8**

| Peak | ID Name | Response Ratio(1) |
|---|---|---|
| 1 | Pentanal | **7** |
| 2 | 4-Propyl Benzaldehyde | **5** |
| 3 | 2-Methyl Propanal | **5** |
| 4 | Heptanal | **5** |
| 5 | 5-Methyl Furfural | **5** |
| 6 | 3-Methyl Butanal | **5** |
| 7 | Hexanal | **4** |
| 8 | 4-Methyl Benzaldehyde | **4** |
| 9 | Nonanal | **4** |
| 10 | Trans-2-Heptenal | **4** |
| 11 | 2-Methyl Butanal | **3** |
| 12 | Trans-2-nonenal | **3** |
| 13 | Octanal | **3** |
| (1) Response Ratio is the response in reference 3.A divided by the response in sample 3.1 (for the same compound). | | |

## Claims

1. A method of producing a food composition comprising microalgal biomass with reduced off-flavour, said method comprising adding at least 0.001 wt.%, calculated by weight of the food product, of an aldehyde scavenger, said aldehyde scavenger containing at least 5 wt.%, calculated by weight of the aldehyde scavenger of cysteine.

2. Method according to claim 1, wherein the aldehyde scavenger contains at least 50 wt.% of cysteine.

3. Method according to claim 1 or 2, wherein the aldehyde scavenger is added in an amount providing 0.001-0.6 wt.% of cysteine, calculated by weight of the food composition.

4. Food composition obtainable by the method according to any one of claims 1 to 3.

5. Food composition comprising

   a. microalgal biomass material, comprising at least 5 wt% of microalgal protein by weight of dry matter of the microalgal biomass, and
   b. 2-pentyl-1,3-thiazolidine-4-carboxylic acid and/or salts thereof, and
   c. optionally, water.

6. Food composition according to claim 5, wherein the food composition contains at least 0.4 mg/kg of 2-pentyl-1,3-thiazolidine-4-carboxylic acid and/or salts thereof and preferably not more than 500 mg/kg of 2-pentyl-1,3-thiazolidine-4-carboxylic acid and/or salts thereof.

7. Food composition according to any one of claims 5 or 6, wherein n-hexanal is present in a concentration of not more than 40 mg/kg, more preferably not more than 20 mg/kg.

8. Food composition comprising

   a. microalgal biomass material, comprising

      i at least 5 wt% of microalgal protein by weight of dry matter of the microalgal biomass,
      ii hexanal or a source of hexanal;

   b. at least 0.001 wt.%, calculated by weight of the food product, of an aldehyde scavenger, said aldehyde scavenger containing at least 5 wt.%, calculated by weight of the aldehyde scavenger of cysteine.

9. Food composition according to claim 8, which is capable of forming 2-pentyl-1,3-thiazolidine-4-carboxylic acid upon contacting with water.

10. Food composition according to claim 8 or 9, wherein the food composition is in the form of a dry water-reconstitutable food composition, and capable of yielding upon reconstitution a liquid food composition in which n-hexanal is present in a concentration of not more than 40 mg/kg, more preferably not more than 20 mg/kg.

11. Food composition according to any one of claims 4 to 10, wherein said microalgal biomass material is in the form of non-lysed single cells and/or clusters of non-lysed single cells, with a particle size (D[4,3]) of 2 μm to 100 μm, preferably from 3 μm to 60 μm, more preferably from 4 to 50 μm, and even more preferably from 5 to 45 μm, as measured upon redispersion in an aqueous medium at a concentration of 3 wt-% of microalgal biomass material by total weight of the aqueous medium and the microalgal biomass.

12. Food composition according to any one of claims 4 to 11 in the form of an instant, cook-up, or ready-to-heat savoury product, a savoury concentrate, a savoury sauce or soup, a condiment, a cooking cream base, a multi-purpose cream, a beverage, a malt-based drink, a milked tea drink, an ice cream, a milk shake, a ketchup or a mayonnaise.

13. Food composition according to any one of claims 4 to 12, comprising from 1 to 40 wt-%, more preferably from 2.5 to 30 wt-% and even more preferably from 5 to 15 wt-% of the microalgal biomass by weight of dry matter of the food composition.

**14.** Food composition according to any one of claims 4 to 13, wherein the microalgal biomass material is *Chlorellaceae* or *Chlorophyceae* biomass material, more preferably *Chlorella* biomass material.

**15.** Use of cysteine as an off-flavour suppressor in a food product containing at least 1 wt.% of microalgal biomass material.

Europäisches Patentamt
European Patent Office
Office européen des brevets

# EUROPEAN SEARCH REPORT

Application Number
EP 24 22 3814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2014/212570 A1 (NORRIS LESLIE [US] ET AL) 31 July 2014 (2014-07-31)<br>* paragraph [0006] *<br>* paragraphs [0020] - [0022] *<br>* claims; examples *<br>* paragraphs [0069] - [0071] * | 4-14<br>1-3,15 | INV.<br>A23L17/60<br>A23L27/00<br>A23L29/00 |
| X<br>Y | US 2010/239712 A1 (BROOKS GEOFFREY [US] ET AL) 23 September 2010 (2010-09-23)<br>* claims; examples *<br>* paragraphs [0007], [0008], [0245] * | 4-14<br>1-3,15 | |
| X<br>Y | US 2016/195503 A1 (JEROSCH HEIKE [FR] ET AL) 7 July 2016 (2016-07-07)<br>* paragraph [0013] *<br>* paragraph [0017] *<br>* paragraph [0053] - paragraph [0055] *<br>* paragraph [0152] * | 4-14<br>1-3,15 | |
| X<br>Y | CN 119 120 204 A (UNIV WUHAN POLYTECHNIC) 13 December 2024 (2024-12-13)<br>* paragraph [n0004] - paragraph [n0004] *<br>* 6);<br>paragraph [n0104] - paragraph [n0104] *<br>* claims; examples * | 4-14<br>1-3,15 | TECHNICAL FIELDS SEARCHED (IPC)<br>A23L |
| Y<br>A | US 2008/050486 A1 (ZHOU SHENGYING [US] ET AL) 28 February 2008 (2008-02-28)<br>* paragraphs [0024] - [0026] *<br>* paragraph [0003] *<br>* claims * | 1-3,15<br>4-14 | |

-/--

The present search report has been drawn up for all claims

1

| Place of search | Date of completion of the search | Examiner |
|---|---|---|
| Munich | 27 May 2025 | Hartlieb, Ariane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 22 3814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIM VAN DURME ET AL: "Evaluation of the Volatile Composition and Sensory Properties of Five Species of Microalgae", JOURNAL OF AGRICULTURAL AND FOOD CHEMISTRY, vol. 61, no. 46, 20 November 2013 (2013-11-20), pages 10881-10890, XP055138932, ISSN: 0021-8561, DOI: 10.1021/jf403112k<br>* Chapter 1-4 *<br>----- | 1-15 | |
| A | COLONIA BRIGITTE STHEPANI ET AL: "Deodorization of algae biomass to overcome off-flavors and odor issues for developing new food products: Innovations, trends, and applications", FOOD CHEMISTRY ADVANCES, [Online] vol. 2, 1 October 2023 (2023-10-01), page 100270, XP093280094, ISSN: 2772-753X, DOI: 10.1016/j.focha.2023.100270 Retrieved from the Internet: URL:https://www.sciencedirect.com/science/article/pii/S2772753X23000916> [retrieved on 2025-05-23]<br>* 10. Conclusions *<br>* 3. Off-flavors and odor substances produced by algae *<br>----- | 1-15 | TECHNICAL FIELDS SEARCHED (IPC) |

The present search report has been drawn up for all claims

1

| Place of search | Date of completion of the search | Examiner |
|---|---|---|
| Munich | 27 May 2025 | Hartlieb, Ariane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO. EP 24 22 3814

This annex lists the patent family members relating to the patent documents cited in the above-mentioned European search report. The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| US 2014212570 A1 | 31-07-2014 | AU 2014209015 A1 | 20-08-2015 |
| | | AU 2017272211 A1 | 04-01-2018 |
| | | BR 112015017811 A2 | 11-07-2017 |
| | | CA 2899003 A1 | 31-07-2014 |
| | | CN 105007755 A | 28-10-2015 |
| | | EP 2948001 A1 | 02-12-2015 |
| | | JP 2016510215 A | 07-04-2016 |
| | | JP 2018143255 A | 20-09-2018 |
| | | KR 20150110752 A | 02-10-2015 |
| | | US 2014212570 A1 | 31-07-2014 |
| | | US 2014234479 A1 | 21-08-2014 |
| | | US 2019297928 A1 | 03-10-2019 |
| | | WO 2014117163 A1 | 31-07-2014 |
| US 2010239712 A1 | 23-09-2010 | AU 2009303354 A1 | 22-04-2010 |
| | | BR PI0920280 A2 | 18-08-2015 |
| | | CA 2740415 A1 | 22-04-2010 |
| | | CN 102271525 A | 07-12-2011 |
| | | CN 104770424 A | 15-07-2015 |
| | | DK 2339925 T3 | 31-10-2022 |
| | | EP 2339925 A2 | 06-07-2011 |
| | | HK 1164061 A1 | 21-09-2012 |
| | | JP 5731982 B2 | 10-06-2015 |
| | | JP 6386727 B2 | 05-09-2018 |
| | | JP 2012505656 A | 08-03-2012 |
| | | JP 2014061009 A | 10-04-2014 |
| | | JP 2016182144 A | 20-10-2016 |
| | | JP 2018126167 A | 16-08-2018 |
| | | MX 339664 B | 03-06-2016 |
| | | MX 352984 B | 15-12-2017 |
| | | PT 2339925 T | 30-12-2022 |
| | | US 2010239712 A1 | 23-09-2010 |
| | | WO 2010045368 A2 | 22-04-2010 |
| US 2016195503 A1 | 07-07-2016 | BR 112016002819 A2 | 01-08-2017 |
| | | CN 105474010 A | 06-04-2016 |
| | | EP 3030896 A1 | 15-06-2016 |
| | | EP 3736569 A1 | 11-11-2020 |
| | | ES 2816998 T3 | 06-04-2021 |
| | | FR 3009619 A1 | 13-02-2015 |
| | | JP 6465885 B2 | 06-02-2019 |
| | | JP 2016532110 A | 13-10-2016 |
| | | KR 20160030570 A | 18-03-2016 |
| | | MX 361326 B | 20-11-2018 |
| | | US 2016195503 A1 | 07-07-2016 |
| | | WO 2015019023 A1 | 12-02-2015 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 22 3814

This annex lists the patent family members relating to the patent documents cited in the above-mentioned European search report. The members are as contained in the European Patent Office EDP file on
The European Patent Office is in no way liable for these particulars which are merely given for the purpose of information.

27-05-2025

| Patent document cited in search report | | Publication date | Patent family member(s) | | | Publication date |
|---|---|---|---|---|---|---|
| CN 119120204 | A | 13-12-2024 | NONE | | | |
| US 2008050486 | A1 | 28-02-2008 | AU | 2007286641 | A1 | 28-02-2008 |
| | | | CA | 2660777 | A1 | 28-02-2008 |
| | | | EP | 2068661 | A1 | 17-06-2009 |
| | | | ES | 2425991 | T3 | 18-10-2013 |
| | | | US | 2008050486 | A1 | 28-02-2008 |
| | | | WO | 2008024904 | A1 | 28-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 24105258 A


### Non-patent literature cited in the description


- Heterotrophic microalgae: a scalable and sustainable protein source. **KLAMCZYNSKA, B.** ; **W. D. MOONEY**. Sustainable protein sources. Academic Press, 2017, 327-339
- **TOM M.M. BERNAERTS et al.** The potential of microalgae and their biopolymers as structuring ingredients in food: A review. *Biotechnology Advances*, 2019, vol. 37 (8), 107419
- **ABREU, A.P.** ; **MARTINS, R.** ; **NUNES, J.** Emerging Applications of Chlorella sp. and Spirulina (Arthrospira) sp.. *Bioengineering*, 2023, vol. 10, 955, https://doi.org/10.3390/bioengineering10080955
- **KUMAR, RAMAN et al.** Microalgae as a sustainable source of edible proteins and bioactive peptides-Current trends and future prospects. *Food Research International*, 2022, vol. 157, 111338, https://doi.org/10.1016/j.foodres.2022.111338
- **TORRES-TIJI, YASIN** ; **FRANCIS J. FIELDS** ; **STEPHEN P. MAYFIELD**. Microalgae as a future food source. *Biotechnology advances*, 2020, vol. 41, 107536
- **CAPORGNO MP** ; **MATHYS A**. Trends in Microalgae Incorporation Into Innovative Food Products With Potential Health Benefits. *Front. Nutr.*, 2018, vol. 5, 58
- **N HOSSEINKHANI** ; **JI MCCAULEY** ; **PJ RALPH**. Key challenges for the commercial expansion of ingredients from algae into human food products. *Algal Research*, 2022, https://www.sciencedirect.com/science/article/pii/S2211926422000674
- **THORÉ, ELI SJ et al.** Microalgae. *Current Biology*, 2023, vol. 33 (3), R91-R95
- Chlorella: Industrial Production of Cell Mass and Chemicals. **JIN LIU** ; **QIANG HU**. Handbook of Microalgal Culture: Applied Phycology and Biotechnology. John Wiley & Sons, 2013
- **DOUCHA, J.** ; **LÍVANSKÝ, K.** Production of high-density Chlorella culture grown in fermenters. *J Appl Phycol*, 2012, vol. 24, 35-43, https://doi.org/10.1007/s10811-010-9643-2
- **SAFI, CARL et al.** Morphology, composition, production, processing and applications of Chlorella vulgaris: A review. *Renewable and sustainable energy reviews*, 2014, vol. 35, 265-278, https://doi.org/10.1016/j.rser.2014.04.007
- **BERNAERTS TMM** ; **GHEYSEN L** ; **FOUBERT I** ; **HENDRICKX ME** ; **VAN LOEY AM**. The potential of microalgae and their biopolymers as structuring ingredients in food: A review. *Biotechnol Adv*, 21 July 2019, vol. 37 (8), 107419